# EUROPÄISCHE PATENTANMELDUNG

(11) **EP 4 759 120 A1**
(43) Veröffentlichungstag der Anmeldung: **17.06.2026**
(21) Anmeldenummer: 25211926.8
(22) Anmeldetag: 29.10.2025
(51) Int. Cl.: A01D 43/08, A01D 69/06

(54) **SELBSTFAHRENDER FELDHÄCKSLER**

(30) Priorität: 13.12.2024 DE 102024137708
(71) Anmelder: CLAAS Selbstfahrende Erntemaschinen GmbH, 33428 Harsewinkel (DE)
(72) Erfinder: Poppenborg,, Maik, 33428 Marienfeld (DE); Graute, Mathias, 48161 Münster (DE); Schiewer, Stefan, 48231 Warendorf (DE); Rohde-Fölling, Marcel, 33428 Harsewinkel (DE); Meyer zu Hörste, Jan, 49214 Bad Rothenfelde (DE); Grove, Carsten, 48361 Beelen (DE); Pollklas, Manfred, 33378 Rheda-Wiedenbrück (DE); Greßmeyer, Christoph, 33428 Marienfeld (DE)
(74) Vertreter: CLAAS Gruppe

(57) **Zusammenfassung**

Selbstfahrender Feldhäcksler (1), umfassend einen Antriebsmotor (9), der mittels eines Verteilergetriebes (11) eine Messertrommel (6a) und eine Nachbeschleunigungsvorrichtung (8) durch einen gemeinsamen Riemenantrieb antreibt, wobei der Riemenantrieb einen Antriebsriemen (14) aufweist, der über eine auf einer Antriebswelle (11a) des Verteilergetriebes angeordnete Abtriebsriemenscheibe (12) eine der Messertrommel (6a) zugeordnete Antriebsriemenscheibe (15) und eine der Nachbeschleunigungsvorrichtung (8) zugeordnete Antriebsriemenscheibe (16) antreibt, wobei zur Beaufschlagung des Antriebsriemens (14) mit einer ersten Vorspannkraft (VK1) eine hydraulisch betätigbare Riemenspannvorrichtung (17) vorgesehen ist, wobei eine Steuerungsvorrichtung (22) des Feldhäckslers (1) vorgesehen ist, die zur Einstellung der ersten Vorspannkraft eingerichtet ist, wobei zumindest eine Sensoreinheit zur Detektion zumindest eines Betriebszustands des Riemenantriebs im Häckselbetrieb vorgesehen ist, wobei die Steuerungsvorrichtung (22) dazu eingerichtet ist, in Abhängigkeit vom zumindest einen detektierten Betriebszustand die erste Vorspannkraft durch Ansteuerung einer Ventilanordnung (23) automatisch für einen einstellbaren definierten Zeitraum auf eine zweite Vorspannkraft zu erhöhen.

## Beschreibung

Die vorliegende Erfindung betrifft einen selbstfahrenden Feldhäcksler gemäß dem Oberbegriff des Anspruches 1. Weiterhin ist ein Verfahren zum Betreiben eines selbstfahrenden Feldhäckslers gemäß dem Oberbegriff des Anspruches 12 Gegenstand der vorliegenden Erfindung.

Aus der EP 4 371 391 A1 ist ein selbstfahrender Feldhäcksler der eingangs genannten Art bekannt, welcher zum Antreiben von Messertrommel und Nachbeschleunigervorrichtung einen Riemenantrieb mit einem Antriebsriemen umfasst, der über eine auf einer Antriebswelle des Verteilergetriebes angeordnete Abtriebsriemenscheibe eine der Messertrommel zugeordnete Antriebsriemenscheibe und eine der Nachbeschleunigungsvorrichtung zugeordnete Antriebsriemenscheibe antreibt. Zur Beaufschlagung des Antriebsriemens mit einer einstellbaren Vorspannkraft ist eine hydraulisch betätigbare Riemenspannvorrichtung vorgesehen.

Im laufenden Betrieb kann es unter bestimmten Einsatzbedingungen des Feldhäckslers zum zumindest temporären Auftreten von ungewollten Schlupf an der Abtriebsriemenscheibe der Messertrommel kommen. Ursächlich hierfür kann eine signifikant abweichende Antriebslast an den Antriebsriemenscheiben von Messertrommel und Nachbeschleunigervorrichtung sein, die auf eine ungleichmäßige Erntegutmenge zurückgehen kann, die von der von Messertrommel und der Nachbeschleunigervorrichtung zu fördern sind. Eine weitere Ursache kann in der Verarbeitung von spezifischen Erntegutarten bestehen, die eine hohe Schnittleistung erfordern, sich dabei aber durch eine in Relation zur Schnittleistung moderate Aufnahmemenge an Erntegut und damit einen geringeren Erntegutdurchsatz auszeichnen. Auch unter einer solchen Einsatzbedingung kommt es zu einer ungleichen Leistungsabnahme zwischen Messertrommel und Nachbeschleunigervorrichtung, die ebenfalls temporär zum ungewollten Auftreten von Schlupf führen kann. Eine dauerhafte Erhöhung der Riemenspannung als Reaktion auf das Auftreten von Schlupf oder zur präventiven Vermeidung führt jedoch zu einer unverhältnismäßigen Lebensdauerreduzierung des Antriebsriemens.

Weiterhin sind aus der DE 10 2020 100 192 A1 ein Riemengetriebe sowie ein Verfahren zum Betreiben des Riemengetriebes für eine landwirtschaftliche Erntemaschine bekannt. Mittels des Riemengetriebes wird eine Einzugswalze eines Schneidwerks der Erntemaschine durch eine dieser zugeordnete Abtriebsscheibe angetrieben. Das Riemengetriebe wird wahlweise in einem Normalbetrieb oder in einem Reversierbetrieb betrieben. Der Reversierbetrieb geht damit einher, dass eine Antriebsrichtung einer Antriebsscheibe des Riemengetriebes umgekehrt wird. Ein solcher Reversierbetrieb dient dazu, eine etwaige Blockade der an die Abtriebsscheibe des Riemengetriebes angeschlossenen Einzugswalze aufzulösen. Der die Antriebsscheibe und Abtriebsscheibe verbindende Antriebsriemen wird mittels eines Riemenspanner mit einer Vorspannkraft beaufschlagt. Bei einem Wechsel der Betriebsart vom Normalbetrieb in den Reversierbetrieb des Riemengetriebes wird der Riemenspanner angesteuert, um die Vorspannkraft zu erhöhen. Beim Wechsel vom Reversierbetrieb zurück zum Normalbetrieb wird die Vorspannkraft wieder verringert.

Ausgehend vom vorstehend genannten Stand der Technik liegt der Erfindung die Aufgabe zugrunde, einen selbstfahrenden Feldhäcksler der eingangs genannten Art weiterzubilden, welcher sich durch eine verbesserte Ansteuerung der Riemenspannvorrichtung zur Schlupfvermeidung im Häckselbetrieb auszeichnet.

Die vorliegende Aufgabe wird durch einen selbstfahrenden Feldhäcksler mit den Merkmalen des Anspruches 1 gelöst. Weiterhin wird die Aufgabe durch ein Verfahren zum Betreiben eines selbstfahrenden Feldhäckslers mit den Merkmalen des Anspruches 12 gelöst. Vorteilhafte Weiterbildungen sind Gegenstand der abhängigen Ansprüche.

Gemäß dem Anspruch 1 wird ein selbstfahrender Feldhäcksler vorgeschlagen, umfassend einen Antriebsmotor, der mittels eines Verteilergetriebes eine Messertrommel einer Häckselvorrichtung und eine Nachbeschleunigungsvorrichtung durch einen gemeinsamen Riemenantrieb antreibt. Der Riemenantrieb weist einen Antriebsriemen auf, der über eine auf einer Antriebswelle des Verteilergetriebes angeordnete Abtriebsriemenscheibe eine der Messertrommel zugeordnete Antriebsriemenscheibe sowie eine der Nachbeschleunigungsvorrichtung zugeordnete Antriebsriemenscheibe antreibt. Zur Beaufschlagung des Antriebsriemens mit einer ersten Vorspannkraft ist eine hydraulisch betätigbare Riemenspannvorrichtung vorgesehen, wobei eine Steuerungsvorrichtung des Feldhäckslers vorgesehen ist, die zur Einstellung der ersten Vorspannkraft eingerichtet ist. Erfindungsgemäß ist vorgesehen, dass zumindest eine Sensoreinheit zur Detektion zumindest eines Betriebszustands des Riemenantriebs im Häckselbetrieb vorgesehen ist, wobei die Steuerungsvorrichtung dazu eingerichtet ist, in Abhängigkeit vom zumindest einen detektierten Betriebszustand die erste Vorspannkraft durch Ansteuerung einer Ventilanordnung automatisch für einen einstellbaren definierten Zeitraum auf eine zweite Vorspannkraft zu erhöhen.

Wesentlich ist die grundsätzliche Überlegung, dass durch eine bedarfsgerechte temporäre Umschaltung von einer ersten Vorspannkraft auf eine erhöhte zweite Vorspannkraft sowohl die benötigte Leistung übertragen werden kann, ohne die Lebensdauer des Antriebsriemens überproportional zu reduzieren. Es ergibt sich somit die Kombination einer maximalen Komponentenlebensdauer gepaart mit einer Leistungssteigerung unter besonderen Umständen, in denen der Hydraulikzylinder der Riemenspannvorrichtung den Antriebsriemen mit der höheren zweiten Vorspannkraft beaufschlagt. Ein weiterer Effekt besteht darin, dass durch die temporäre Umschaltung der Riementrieb des Feldhäckslers auch unter widrigen Bedingungen die volle Leistung ohne Schlupf erbringen kann. Weiterhin ist in diesen Situationen keine Leistungsabnahme vom Fahrer des Feldhäckslers wahrnehmbar.

Die Erhöhung von der ersten Vorspannkraft auf die höhere zweite Vorspannkraft erfolgt insbesondere sprunghaft. Unter einer sprunghaften Erhöhung von der ersten Vorspannkraft auf die höhere zweite Vorspannkraft ist zu verstehen, dass diese mit dem Beginn des definierten Zeitraumes durch die Ansteuerung der Ventilanordnung der Riemenspannvorrichtung mittels der Steuerungsvorrichtung vorgenommen wird.

Durch eine bedarfsgerechte temporäre Umschaltung von der ersten Vorspannkraft auf die höhere zweite Vorspannkraft kann die benötigte Leistung übertragen werden, ohne die Lebensdauer des Antriebsriemens überproportional zu reduzieren. Zudem können die Lagerkräfte und Achslasten im Wesentlichen auf dem bekannten Niveau gehalten werden. Zudem können durch die erfindungsgemäße Ansteuerung eine Zunahme einer Bauraumbeanspruchung und eine überproportionale Kostensteigerung durch das Vorhalten von größeren Komponenten verhindert werden.

Insbesondere kann der zumindest eine Betriebszustand ein Betriebszustand sein, in welchem an der Antriebsriemenscheibe der Messertrommel Schlupf auftritt. Ein solcher Betriebszustand kann eintreten, wenn das Antriebsdrehmoment an der Messertrommel sehr hoch ist, das Antriebsdrehmoment an der Nachbeschleunigervorrichtung jedoch sehr gering. Diese Betriebssituation kann unterschiedliche Ursachen haben, wie z.B. das Einfahren in den Bestand. Die Messertrommel zerkleinert bereits aufgenommenes Erntegut, während die Nachbeschleunigervorrichtung noch kein gehäckseltes Erntegut von der Häckseltrommel erhalten hat. Ebenso kann bei einem Stopfer im Gutfluss vor der Nachbeschleunigervorrichtung diese Betriebssituation eintreten. Eine weitere Betriebssituation, in welcher es zum Auftreten von Schlupf kommen kann, stellt beispielsweise das Ernten von Miscanthus dar. Eine bei der Ernte von Miscanthus auftretende besondere Anforderung besteht darin, dass die Schnittkräfte an der Messertrommel bei diesem Erntegut sehr hoch sind und der Durchsatz, und folglich die Leistungsabnahme an der Nachbeschleunigervorrichtung, aber in Summe moderat ist, was zur Diskrepanz der Antriebsdrehmomente und damit dem Auftreten von Schlupf als Betriebszustand führen kann.

Bevorzugt kann die zumindest eine Sensoreinheit zur Erfassung einer Antriebsdrehzahl des Antriebsmotors und einer Drehzahl der Messertrommel eingerichtet sein und Signale für die Antriebsdrehzahl des Antriebsmotors und für die Drehzahl der Messertrommel an die Steuerungsvorrichtung zur Auswertung übermittelt. Hierzu kann die zumindest eine Sensoreinheit Drehzahlsensoren umfassen. Einer der Drehzahlsensoren erfasst die Antriebsdrehzahl des Antriebsmotors und der weitere Drehzahlsensor erfasst die Drehzahl der Messertrommel.

Zur Bestimmung des Betriebszustands, in welchem an der Antriebsriemenscheibe der Messertrommel Schlupf auftritt, kann die Steuerungsvorrichtung dazu eingerichtet sein, einen Quotienten aus der Antriebsdrehzahl des Antriebsmotors und der Drehzahl der Messertrommel mit einem Grenzwert zu vergleichen. Der Quotient kann als Indikator zur Bestimmung des aktuellen Betriebszustands dienen.

Dabei kann der zumindest eine Betriebszustand, in welchem an der Antriebsriemenscheibe der Messertrommel Schlupf auftritt, der Betriebszustand sein, in welchem der Quotient den Grenzwert überschreitet. Mit dem Überschreiten des Grenzwertes wird auf das Auftreten von Schlupf an der Antriebsriemenscheibe der Messertrommel geschlossen, was zur automatischen Ansteuerung der Riemenspannvorrichtung führt, um die erste Vorspannkraft für den einstellbaren definierten Zeitraum auf die zweite Vorspannkraft zu erhöhen.

Gemäß einer bevorzugten Weiterbildung kann die Steuerungsvorrichtung dazu eingerichtet sein, einen ersten Spanndruck, mit welcher ein Hydraulikzylinder der Riemenspannvorrichtung beaufschlagt ist, zur Erhöhung von der ersten Vorspannkraft auf die zweite Vorspannkraft innerhalb des definierten Zeitraums auf einen zweiten Spanndruck zu erhöhen, wobei der zweite Spanndruck zumindest doppelt so groß wie der erste Spanndruck ist. Zur Erhöhung auf die zweite Vorspannkraft wird der Spanndruck der Riemenspannvorrichtung innerhalb des definierten Zeitraums zumindest verdoppelt. So kann der erste Spanndruck der Riemenspannvorrichtung zur Aufrechterhaltung der ersten Vorspannkraft vorzugsweise etwa 30 bar betragen. Der zweite Spanndruck, welcher zur Aufrechterhaltung der zweiten Vorspannkraft der Riemenspannvorrichtung erforderlich ist, kann mindestens 60 bar, besonders bevorzugt etwa 70 bar betragen. Der bevorzugte Spanndruck von etwa 70 bar kann aus einem maximal zulässigen Trumkaftverhältnis der zwei Riementrume, Lasttrum oder auch Arbeitstrum genannt und Leertrum, an der Antriebsriemenscheibe der Messertrommel resultieren.

Weiter bevorzugt kann die Steuerungsvorrichtung dazu eingerichtet sein, während des definierten Zeitraums das Auftreten von Schlupf als Betriebszustand fortlaufend zu bestimmen. Somit kann sichergestellt werden, dass für die Dauer von Einsatzbedingungen des Feldhäckslers, die zum temporären Auftreten von Schlupf an der Antriebsriemenscheibe der Messertrommel führen, der Spanndruck der Riemenspannvorrichtung zur Aufrechterhaltung der zweiten Vorspannkraft aufrechterhalten bleibt.

Hierzu kann die Steuerungsvorrichtung dazu eingerichtet sein, bei fortwährender Detektion des Auftretens von Schlupf als Betriebszustand den definierten Zeitraum iterativ, insbesondere um den definierten Zeitraum, zu verlängern. Hierdurch kann die zweite Vorspannkraft für die Dauer des Betriebszustands, in welchem an der Antriebsriemenscheibe der Messertrommel Schlupf auftritt, aufrechterhalten werden.

Gemäß einer Weiterbildung kann der zumindest eine Betriebszustand ein Betriebszustand sein, in welchem eine Schubumkehr im Riemenantrieb auftritt. Eine Schubumkehr im Riemenantrieb kann auftreten, wenn die Arbeitsaggregate des Feldhäckslers abgeschaltet werden sollen.

Insbesondere kann die Steuerungsvorrichtung dazu eingerichtet sein, den Betriebszustand der Schubumkehr in Abhängigkeit vom Entkoppeln der Messertrommel und der Nachbeschleunigungsvorrichtung vom Antriebsmotor zu bestimmen. Die Erhöhung von der ersten Vorspannkraft auf die höhere zweite Vorspannkraft auch bei einem Abbremsvorgang nach dem Auskuppeln der Messertrommel, der Nachbeschleunigungsvorrichtung und des Verteilergetriebes ist von Vorteil, um die vom Gesetzgeber erlaubten Abbremszeiten einzuhalten. Beim Abbremsen der Aggregate entsteht durch das Massenträgheitsmoment eine Schubumkehr im Riemenantrieb. Der Antriebsriemen kann dabei unter anderem die Antriebsriemenscheibe am Antriebsmotor und zumindest eine am Verteilergetriebe angebundene Hydraulikpumpe antreiben.

Weiter kann die Steuerungsvorrichtung dazu eingerichtet sein, zumindest eine am Verteilergetriebe angeordnete Hydraulikpumpe anzusteuern, um im Betriebszustand der Schubumkehr das Fördervolumen der zumindest einen Hydraulikpumpe zu erhöhen. Bevorzugt kann die zumindest eine Hydraulikpumpe als Axialkolbenpumpe ausgeführt sein. Mittels der zumindest einen Hydraulikpumpe kann ein Hydraulikmotor angetrieben werden, der dem Antrieb eines Vorsatzgerätes des Feldhäckslers dient.

Weiterhin wird die eingangs gestellte Aufgabe durch ein Verfahren zum Betreiben eines selbstfahrenden Feldhäckslers gemäß dem nebengeordneten Anspruch 12 gelöst.

Gemäß dem Anspruch 12 wird ein Verfahren zum Betreiben eines selbstfahrenden Feldhäckslers vorgeschlagen, wobei der Feldhäcksler einen Antriebsmotor aufweist, durch den mittels eines Verteilergetriebes eine Messertrommel und eine Nachbeschleunigungsvorrichtung durch einen gemeinsamen Riemenantrieb angetrieben werden, wobei der Riemenantrieb einen Antriebsriemen aufweist, durch den über eine auf einer Antriebswelle des Verteilergetriebes angeordnete Abtriebsriemenscheibe eine der Messertrommel zugeordnete Antriebsriemenscheibe sowie eine der Nachbeschleunigungsvorrichtung zugeordnete Antriebsriemenscheibe angetrieben werden, wobei der Antriebsriemen durch eine hydraulisch betätigte Riemenspannvorrichtung mit einer ersten Vorspannkraft beaufschlagt wird, wobei die erste Vorspannkraft durch eine Steuerungsvorrichtung des Feldhäckslers eingestellt wird. Das erfindungsgemäße Verfahren ist dadurch gekennzeichnet, dass zumindest ein Betriebszustand des Riemenantriebs im Häckselbetrieb durch zumindest eine Sensoreinheit detektiert wird, wobei durch die Steuerungsvorrichtung in Abhängigkeit vom zumindest einen detektierten Betriebszustand die erste Vorspannkraft durch Ansteuerung einer Ventilanordnung automatisch für einen einstellbaren definierten Zeitraum auf eine zweite Vorspannkraft erhöht wird. Auf die erfindungsgemäßen Ausführungen zum Feldhäcksler darf verwiesen werden.

Bevorzugt kann als der zumindest eine Betriebszustand ein Betriebszustand bestimmt werden, in welchem an der Antriebsriemenscheibe der Messertrommel das Auftreten von Schlupf detektiert wird, wobei der zumindest eine Betriebszustand bestimmt wird, indem ein durch die Steuerungsvorrichtung gebildeter Quotient aus der Antriebsdrehzahl des Antriebsmotors und der Drehzahl der Messertrommel mit einem Grenzwert verglichen wird, wobei der Grenzwert durch den Quotienten überschritten wird.

Insbesondere kann als der zumindest eine Betriebszustand ein Betriebszustand bestimmt werden, in welchem eine Schubumkehr im Riemenantrieb detektiert wird.

Gemäß einer bevorzugten Weiterbildung kann bei fortwährender Detektion des Auftretens von Schlupf als Betriebszustand der definierte Zeitraum durch die Steuerungsvorrichtung iterativ um den definierten Zeitraum verlängert werden.

Die vorliegende Erfindung wird nachstehend anhand eines in den Zeichnungen dargestellten Ausführungsbeispieles näher erläutert.

Es zeigen:
- Fig. 1: eine schematische Ansicht eines selbstfahrenden Feldhäckslers;
- Fig. 2: schematisch und exemplarisch eine perspektivische Ansicht eines Antriebssystems des Feldhäckslers;
- Fig. 3: schematisch und exemplarisch eine Seitenansicht eines Teils des Antriebssystems; und
- Fig. 4: schematisch und exemplarisch eine vereinfachte Darstellung einer Ventilanordnung zur Ansteuerung einer Riemenspannvorrichtung des Antriebssystems.

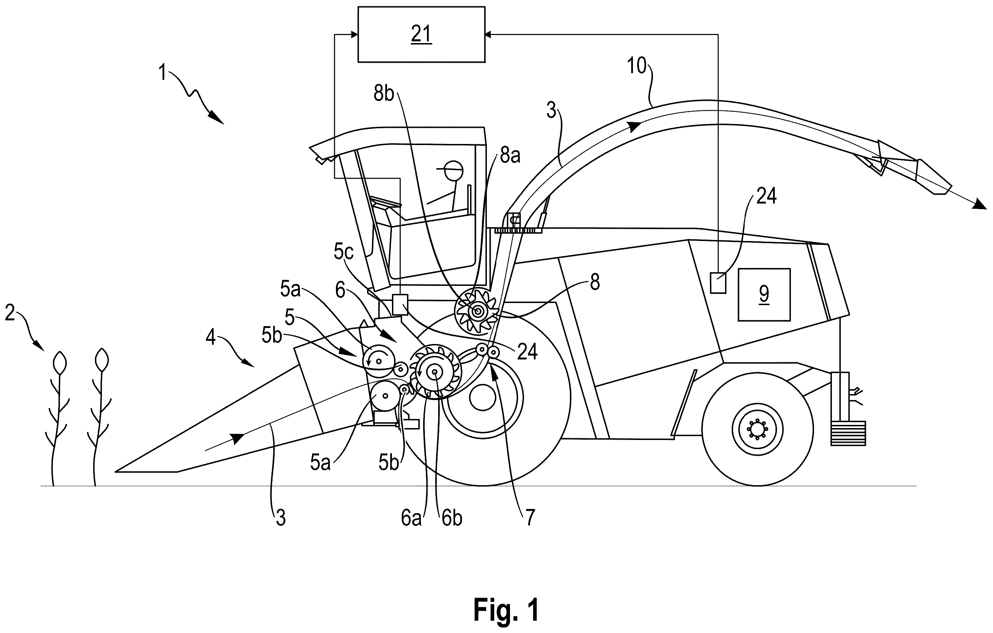

In Fig. 1 ist eine schematische Ansicht eines selbstfahrenden Feldhäckslers 1 dargestellt. Der Feldhäcksler 1 erntet beziehungsweise nimmt mittels eines Vorsatzgerätes 4 Erntegut 2 vom Feld auf, um anschließend das aufgenommene Erntegut 2 in Form eines Erntegutstroms 3 (in Fig. 1 als mit Pfeilen versehene Linie angedeutet) nachgeordneten Arbeitsorganen, die als Bearbeitungs- und Förderorgane des Feldhäckslers 1 ausgeführt sind, zuzuführen und mittels einer Überladeeinrichtung in einen - nicht dargestellten - Ladebehälter abzuwerfen. Die Bearbeitungs- und Förderorgane des Feldhäckslers 1 umfassen unter anderem eine Einzugsvorrichtung 5, eine Häckselvorrichtung 6, eine optionale Konditioniereinrichtung 7 sowie eine Nachbeschleunigungsvorrichtung 8.

Die Einzugsvorrichtung 5 besteht aus mehreren in einem Einzugsgehäuse 5c hintereinander angeordneten, angetriebenen Walzenpaaren 5a, 5b. Das Vorsatzgerät 4 ist an die Einzugsvorrichtung 5 ankoppelbar. Die Häckselvorrichtung 6 umfasst eine rotierende, mit Messern ausgestatteten Messertrommel 6a, mittels der das aufgenommene Erntegut 2 in Zusammenwirkung mit einer Gegenschneide zerkleinert wird. Die Messertrommel 6a ist auf einer angetriebenen Messertrommelwelle 6b angeordnet. Der Häckselvorrichtung 6 ist in einem Förderschacht in Gutstromförderrichtung nachgelagert die optionale Konditioniereinrichtung 7 angeordnet, die bei Bedarf aus dem Erntegutstrom 3 entfernbar ist. Der Konditioniereinrichtung 7 im Förderschacht ist in Gutstromförderrichtung der Nachbeschleunigungsvorrichtung 8 nachgelagert, welche das Erntegut 2 mittels rotierender Wurfpaddel für den sicheren Auswurf durch die als Auswurfkrümmer ausgeführte Überladeeinrichtung 10 beschleunigt. Die Nachbeschleunigungsvorrichtung 8 umfasst auf einer Welle 8b drehfest angeordnete Förderelemente 8a. Im rückwärtigen Bereich des Feldhäckslers 1 ist ein bevorzugt als Verbrennungsmotor ausgeführter Antriebsmotor 9 als Hauptantriebsaggregat angeordnet. Alternative Ausführungsformen des Antriebsmotor 9 sind denkbar.

Als an die Einzugsvorrichtung 5 ankoppelbare Vorsatzgerät 4 kommen unterschiedliche Arten von Vorsatzgeräten zum Einsatz, die in Abhängigkeit von der zu verarbeitenden Erntegutart ausgewählt werden. Beispielsweise wird zur Aufnahme von in Schwaden abgelegtem Erntegut 2 eine so genannte Pick-up am Feldhäcksler 1 verwendet. Für das Ernten von Ganzpflanzen kommt hingegen ein Scheibenmähwerk zum Einsatz. Beim Ernten von Mais wird ein reihenunabhängig arbeitendes Maisgebiss oder ein reihenabhängig arbeitender Maispflücker an die Einzugsvorrichtung 5 des Feldhäckslers 1 angekoppelt.

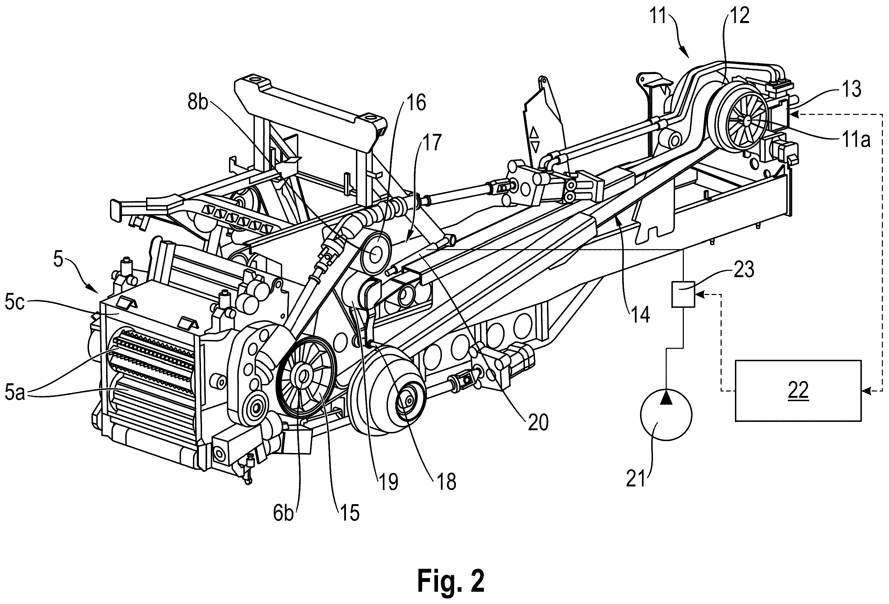

In Fig. 2 ist exemplarisch und schematisch eine perspektivische Ansicht eines Antriebssystems des Feldhäckslers 1 dargestellt. Die schematische Darstellung zeigt insbesondere die Komponenten des als Riemenantrieb ausgeführten Antriebssystems, welche der Kraftübertragung zur Häckselvorrichtung 6 respektive der Messertrommel 6a sowie der Nachbeschleunigungsvorrichtung 8 dienen.

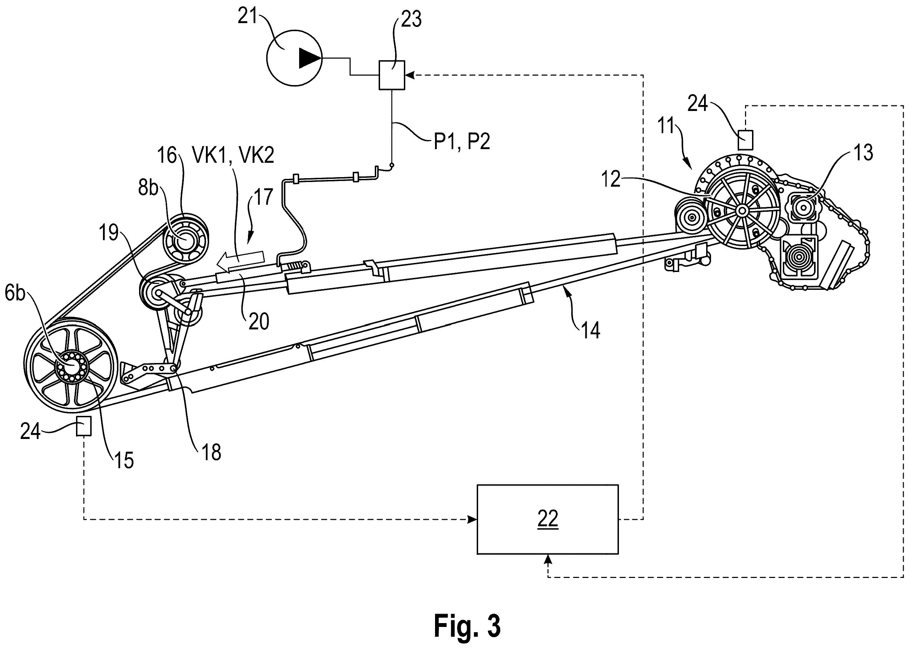

Die Darstellung in Fig. 3 zeigt schematisch und exemplarisch eine Seitenansicht des Teils des Antriebssystems, welcher der Kraftübertragung vom Antriebsmotor 9 zur Messertrommel 6a sowie der Nachbeschleunigungsvorrichtung 8 dient.

Der Antriebsmotor 9 treibt über eine - nicht dargestellte - Motorwelle ein Verteilergetriebe 11 an. Das Verteilergetriebe 11 umfasst eine auf einer Antriebswelle 11a angeordnete Abtriebsriemenscheibe 12, welche durch eine hydraulisch betätigbare Kupplung mit der Motorwelle des Antriebsmotors 9 schaltbar verbunden ist. Weiterhin ist an einer weiteren Antriebswelle des Verteilergetriebes 11 zumindest eine Hydraulikpumpe 13 unmittelbar an das Verteilergetriebe 11 angeschlossen.

Durch die Abtriebsriemenscheibe 12 wird mittels eines Antriebsriemens 14 die endseitig auf der Messertrommelwelle 6b angeordnete Antriebsriemenscheibe 15 angetrieben. Der Antriebsriemen 14 treibt des Weiteren mittels der an der Welle 8b angeordneten Antriebsriemenscheibe 16 die Nachbeschleunigungsvorrichtung 8 an. Der Antriebsriemen 14 wird durch eine Riemenspannvorrichtung 17, die eine um eine Achse 18 schwenkbare Spannrolle 19 sowie zumindest einen Hydraulikzylinder 20 umfasst, mit einer einstellbaren ersten Vorspannkraft VK1 oder zweiten Vorspannkraft VK2 beaufschlagt. Die Abtriebsriemenscheibe 12, der Antriebsriemen 14 sowie die Antriebsriemenscheiben 15, 16 bilden einen Antriebsstrang zum Antreiben zumindest der Messertrommel 6a sowie der Nachbeschleunigungsvorrichtung 8.

Zur Druckbeaufschlagung des zumindest einen Hydraulikzylinders 20 ist dieser mit einem Hydrauliksystem 21 des Feldhäckslers 1 verbunden. Das Hydrauliksystem 21 des Feldhäckslers 1 kann als Konstantdrucksystem ausgeführt sein.

Weiterhin ist eine Steuerungsvorrichtung 22 vorgesehen. Mittels der Steuerungsvorrichtung 22 sind die erste Vorspannkraft VK1 und die zweite Vorspannkraft VK2 automatisch einstellbar, mit welchen der Antriebsriemen 14 durch die hydraulisch betätigbare Riemenspannvorrichtung 17 wahlweise beaufschlagt wird.

Zur Regelung eines mit der ersten Vorspannkraft VK1 korrespondierenden ersten Spanndrucks P1 im Hydraulikzylinder 20 sowie eines mit der zweiten Vorspannkraft VK2 korrespondierenden zweiten Spanndrucks P2 ist eine Ventilanordnung 23 vorgesehen. Mittels der Ventilanordnung 23 wird der Hydraulikzylinder 20 wahlweise mit dem ersten Spanndruck P1 oder dem zweiten Spanndruck P2 beaufschlagt. Die Ventilanordnung 23 wird hierzu durch die Steuerungsvorrichtung 22 automatisch angesteuert.

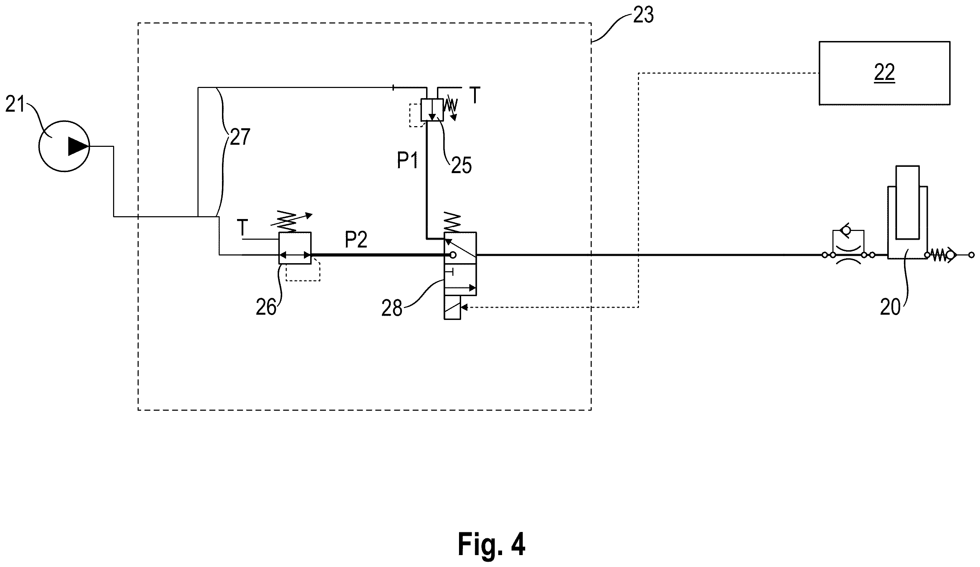

In Fig. 4 ist schematisch und exemplarisch eine vereinfachte Darstellung der Ventilanordnung 23 zur Ansteuerung der Riemenspannvorrichtung 17 des Antriebssystems dargestellt.

Die Ventilanordnung 23 umfasst im dargestellten Ausführungsbeispiel zwei Druckregelventile 25, 26 sowie ein Wegeventil 28. Die Druckregelventile 25, 26 stehen über Zuleitungen 27 mit dem Hydrauliksystem 21 als gemeinsame Druckquelle in Verbindung. Denkbar ist aber auch, dass die beiden Druckregelventile 25, 26 mit zwei voneinander unabhängigen Druckquellen verbunden sind. Die Druckregelventile 25, 26 sind bevorzugt als Druckbegrenzungsventile ausgeführt.

Das Wegeventil 28 ist im dargestellten Ausführungsbeispiel als 3/2-Wegeventil ausgeführt. Die in Fig. 4 gezeigte erste Schaltstellung des Wegeventils 28 verbindet den Hydraulikzylinder 20 mit dem Druckregelventil 25, wodurch der Hydraulikzylinder 20 mit dem ersten Spanndruck P1 beaufschlagt ist. Die Verbindung zwischen dem anderen Druckregelventil 26 und dem Hydraulikzylinder 20 ist gesperrt. Dabei kann der erste Spanndruck P1 der Riemenspannvorrichtung 17 zur Aufrechterhaltung der ersten Vorspannkraft VK1 vorzugsweise etwa 30 bar betragen.

Durch die Ansteuerung des Wegeventils 28 durch die Steuerungsvorrichtung 22 kann das Wegeventil 28 in eine abweichende zweite Schaltstellung überführt werden, in welcher das Wegeventil 28 den Hydraulikzylinder 20 mit dem Druckregelventil 26 verbindet, wodurch der Hydraulikzylinder 20 mit dem zweiten Spanndruck P2 beaufschlagt wird. Die Verbindung zwischen dem anderen Druckregelventil 25 und dem Hydraulikzylinder 20 ist gesperrt. Dabei ist der zweite Spanndruck P2 der Riemenspannvorrichtung 17 zur Aufrechterhaltung der zweiten Vorspannkraft VK2 mindestens doppelt so groß wie erste Spanndruck P1. Vorzugsweise beträgt der zweite Spanndruck P2 mindestens 60 bar, besonders bevorzugt 70 bar.

Die Steuerungsvorrichtung 22 ist dazu eingerichtet, in Abhängigkeit von zumindest einem detektieren Betriebszustand die erste Vorspannkraft VK1 durch die Ansteuerung der Ventilanordnung 23 automatisch für einen einstellbaren definierten Zeitraum auf die zweite Vorspannkraft VK2 zu erhöhen.

Der zumindest eine zu detektierende Betriebszustand ist ein Betriebszustand, in welchem an der Antriebsriemenscheibe 15 der Messertrommel 6a Schlupf auftritt.

Zur Detektion von Schlupf als ein Betriebszustand kann vorgesehen sein, dass zumindest eine Sensoreinheit zur Erfassung einer Antriebsdrehzahl des Antriebsmotors 9 und einer Drehzahl der Messertrommel 6a vorgesehen ist. Von der zumindest einen Sensoreinheit werden Signale für die Antriebsdrehzahl des Antriebsmotors 9 und für die Drehzahl der Messertrommel 6a an die Steuerungsvorrichtung 22 zur Auswertung übermittelt. Hierzu kann die zumindest eine Sensoreinheit zumindest zwei Drehzahlsensoren 24 umfassen. Einer der Drehzahlsensoren 24 erfasst die Antriebsdrehzahl des Antriebsmotors 9 und der weitere Drehzahlsensor 24 erfasst die Drehzahl der Messertrommel 6a.

Die Steuerungsvorrichtung 22 ist dazu eingerichtet, einen Quotienten aus der Antriebsdrehzahl des Antriebsmotors 9 und der Drehzahl der Messertrommel 6a zu bilden und mit einem in einer Speichereinheit der Steuerungsvorrichtung 22 hinterlegten oder hinterlegbaren Grenzwert zu vergleichen, um den zumindest einen Betriebszustand, in welchem an der Antriebsriemenscheibe 15 der Messertrommel 6a Schlupf auftritt, zu bestimmen.

Der zumindest eine Betriebszustand, in welchem an der Antriebsriemenscheibe der Messertrommel Schlupf auftritt, ist als der Betriebszustand definiert, in welchem der Quotient aus der Antriebsdrehzahl des Antriebsmotors 9 und der Drehzahl der Messertrommel 6a den hinterlegten oder hinterlegbaren Grenzwert überschreitet.

Als Reaktion auf die Überschreitung des Grenzwertes wird die Ventilanordnung 23 durch die Steuerungsvorrichtung 22 automatisch angesteuert, um das Wegeventil 28 von der ersten Schaltstellung in die zweite Schaltstellung zu überführen.

Dabei wird der erste Spanndruck P1, mit der der Hydraulikzylinder 20 der Riemenspannvorrichtung 17 beaufschlagt ist, zur Erhöhung ausgehend von der ersten Vorspannkraft VK1 auf die zweite Vorspannkraft VK2 innerhalb des definierten Zeitraums auf den zweiten Spanndruck P2 erhöht.

Für den definierten Zeitraum der temporären Ansteuerung der Ventilanordnung 23 hat sich eine maximale Dauer von 15 Sekunden, vorzugsweise von 10 Sekunden, als vorteilhaft erwiesen.

Die Steuerungsvorrichtung 22 ist dazu eingerichtet, während des definierten Zeitraums das Auftreten von Schlupf als Betriebszustand fortlaufend zu bestimmen. Auf diese Weise wird überwacht, ob der Betriebszustand, der zur temporären Erhöhung der Vorspannkraft VK1 auf VK2 geführt hat, fortbesteht oder beseitigt werden konnte.

Konnte das Auftreten von Schlupf als Betriebszustand während des definierten Zeitraumes nicht behoben werden, ist vorgesehen, dass die Steuerungsvorrichtung 22 bei fortwährender Detektion des Auftretens von Schlupf als Betriebszustand den definierten Zeitraum iterativ, insbesondere um den definierten Zeitraum, zu verlängern. Dabei ist eine zeitliche Obergrenze der Verlängerungen vorgesehen, beispielsweise durch eine vorgegebene oder vorgebbare Gesamtanzahl der Verlängerungen. Hierdurch kann vermieden werden, dass die Ansteuerung der Ventilanordnung 23 in einer Endlosschleife erfolgt.

Ein weiterer Betriebszustand, welcher zur Ansteuerung der Ventilanordnung 23 durch die Steuerungsvorrichtung 22 führen kann, ist der Betriebszustand, in welchem eine Schubumkehr im Riemenantrieb auftritt. Die Steuerungsvorrichtung 22 ist dazu eingerichtet, den Betriebszustand der Schubumkehr in Abhängigkeit vom trieblichen Entkoppeln der Messertrommel 6a und der Nachbeschleunigungsvorrichtung 8 vom Antriebsmotor 9 zu bestimmen. Der Antriebsriemen 14 treibt im Betriebszustand der Schubumkehr die Antriebsriemenscheibe 12 am Antriebsmotor 9 und die zumindest eine am Verteilergetriebe 11 angebundene Hydraulikpumpe 13 an. Durch die temporäre Erhöhung auf die Vorspannkraft VK2 wird die Übertragungsfähigkeit des Antriebsriemens 14 für den Betriebszustand der Schubumkehr erhöht, was sich positiv auf die Abbremszeiten auswirkt.

Weiterhin kann die Steuerungsvorrichtung dazu eingerichtet sein, die zumindest eine am Verteilergetriebe 11 angeordnete Hydraulikpumpe 13 anzusteuern, um im Betriebszustand der Schubumkehr das Fördervolumen zu erhöhen. Dabei kann das geförderte Öl über ein Druckbegrenzungsventil strömen, sodass die Energie in Wärme umgewandelt wird.

Das erfindungsgemäße Verfahren zum Betreiben des selbstfahrenden Feldhäckslers 1 sieht vor, dass mit dem Antriebsmotor 9 das Verteilergetriebes 11 die Messertrommel 6a und die Nachbeschleunigungsvorrichtung 8 durch den gemeinsamen Riemenantrieb angetrieben werden, wobei durch den Antriebsriemen 14 über die auf der Antriebswelle 11a des Verteilergetriebes 11 angeordnete Abtriebsriemenscheibe 12 die der Messertrommel 6a zugeordnete Antriebsriemenscheibe 15 und die der Nachbeschleunigungsvorrichtung 8 zugeordnete Antriebsriemenscheibe 16 angetrieben werden, wobei der Antriebsriemen 14 durch die hydraulisch betätigbare Riemenspannvorrichtung 17 mit der ersten Vorspannkraft VK1 beaufschlagt wird, wobei die erste Vorspannkraft VK1 durch die Steuerungsvorrichtung 22 eingestellt wird, wobei zumindest ein Betriebszustand des Riemenantriebs im Häckselbetrieb durch die zumindest eine Sensoreinheit detektiert wird, wobei durch die Steuerungsvorrichtung 22 in Abhängigkeit vom zumindest einen detektierten Betriebszustand die erste Vorspannkraft VK1 durch die Ansteuerung der Ventilanordnung 23 automatisch für einen einstellbaren definierten Zeitraum auf eine zweite Vorspannkraft VK2 erhöht wird.

### Bezugszeichenliste

| | | | |
|---|---|---|---|
| 1 | Feldhäcksler | 26 | Druckregelventil |
| 2 | Erntegut | 27 | Zuleitung |
| 3 | Erntegutstrom | 28 | Wegeventil |
| 4 | Vorsatzgerät | | |
| 5 | Einzugsvorrichtung | P1 | Erster Spanndruck |
| 5a | Walzenpaar | P2 | Zweiter Spanndruck |
| 5b | Walzenpaar | VK1 | Erste Vorspannkraft |
| 5c | Einzugsgehäuse | VK2 | Zweite Vorspannkraft |
| 6 | Häckselvorrichtung | | |
| 6a | Messertrommel | | |
| 6b | Messertrommelwelle | | |
| 7 | Konditioniereinrichtung | | |
| 8 | Nachbeschleunigungsvorrichtung | | |
| 8a | Förderelemente | | |
| 8b | Welle | | |
| 9 | Antriebsmotor | | |
| 10 | Überladeeinrichtung | | |
| 11 | Verteilergetriebe | | |
| 11a | Antriebswelle | | |
| 12 | Abtriebsriemenscheibe | | |
| 13 | Hydraulikpumpe | | |
| 14 | Antriebsriemen | | |
| 15 | Antriebsriemenscheibe | | |
| 16 | Antriebsriemenscheibe | | |
| 17 | Riemenspannvorrichtung | | |
| 18 | Achse | | |
| 19 | Spannrolle | | |
| 20 | Hydraulikzylinder | | |
| 21 | Hydrauliksystem | | |
| 22 | Steuerungsvorrichtung | | |
| 23 | Ventilanordnung | | |
| 24 | Drehzahlsensor | | |
| 25 | Druckregelventil | | |

## Patentansprüche

1. Selbstfahrender Feldhäcksler (1), umfassend einen Antriebsmotor (9), der mittels eines Verteilergetriebes (11) eine Messertrommel (6a) sowie eine Nachbeschleunigungsvorrichtung (8) durch einen gemeinsamen Riemenantrieb antreibt, wobei der Riemenantrieb einen Antriebsriemen (14) aufweist, der über eine auf einer Antriebswelle (11a) des Verteilergetriebes (11) angeordnete Abtriebsriemenscheibe (12) eine der Messertrommel (6a) zugeordnete Antriebsriemenscheibe (15) und eine der Nachbeschleunigungsvorrichtung (8) zugeordnete Antriebsriemenscheibe (16) antreibt, wobei zur Beaufschlagung des Antriebsriemens (14) mit einer ersten Vorspannkraft (VK1) eine hydraulisch betätigbare Riemenspannvorrichtung (17) vorgesehen ist, wobei eine Steuerungsvorrichtung (22) des Feldhäckslers (1) vorgesehen ist, die zur Einstellung der ersten Vorspannkraft (VK1) eingerichtet ist, **dadurch gekennzeichnet, dass** zumindest eine Sensoreinheit zur Detektion zumindest eines Betriebszustands des Riemenantriebs im Häckselbetrieb vorgesehen ist, wobei die Steuerungsvorrichtung (22) dazu eingerichtet ist, in Abhängigkeit vom zumindest einen detektierten Betriebszustand die erste Vorspannkraft (VK1) durch Ansteuerung einer Ventilanordnung (23) automatisch für einen einstellbaren definierten Zeitraum auf eine zweite Vorspannkraft (VK2) zu erhöhen.

2. Selbstfahrender Feldhäcksler (1) nach Anspruch 1, **dadurch gekennzeichnet, dass** der zumindest eine Betriebszustand ein Betriebszustand ist, in welchem an der Antriebsriemenscheibe (15) der Messertrommel (6a) Schlupf auftritt.

3. Selbstfahrender Feldhäcksler (1) nach Anspruch 1 oder 2, **dadurch gekennzeichnet, dass** die zumindest eine Sensoreinheit zur Erfassung einer Antriebsdrehzahl des Antriebsmotors (9) und einer Drehzahl der Messertrommel (6a) eingerichtet ist und Signale für die Antriebsdrehzahl des Antriebsmotors (9) und für die Drehzahl der Messertrommel (6a) an die Steuerungsvorrichtung (22) zur Auswertung übermittelt.

4. Selbstfahrender Feldhäcksler (1) nach Anspruch 3, **dadurch gekennzeichnet, dass** die Steuerungsvorrichtung (22) dazu eingerichtet ist, einen Quotienten aus der Antriebsdrehzahl des Antriebsmotors (9) und der Drehzahl der Messertrommel (6a) mit einem Grenzwert zu vergleichen, um den zumindest einen Betriebszustand, in welchem an der Antriebsriemenscheibe (12) der Messertrommel (6a) Schlupf auftritt, zu bestimmen.

5. Selbstfahrender Feldhäcksler (1) nach Anspruch 4, **dadurch gekennzeichnet, dass** der zumindest eine Betriebszustand, in welchem an der Antriebsriemenscheibe (12) der Messertrommel (6a) Schlupf auftritt, der Betriebszustand ist, in welchem der Quotient den Grenzwert überschreitet.

6. Selbstfahrender Feldhäcksler (1) nach einem der vorangehenden Ansprüche, **dadurch gekennzeichnet, dass** die Steuerungsvorrichtung (22) dazu eingerichtet ist, einen ersten Spanndruck (P1), mit welcher ein Hydraulikzylinder (20) der Riemenspannvorrichtung (17) beaufschlagt ist, zur Erhöhung von der ersten Vorspannkraft (VK1) auf die zweite Vorspannkraft (VK2) innerhalb des definierten Zeitraums auf einen zweiten Spanndruck (P2) zu erhöhen, wobei der zweite Spanndruck (P2) zumindest doppelt so groß wie der erste Spanndruck (P1) ist.

7. Selbstfahrender Feldhäcksler (1) nach einem der vorangehenden Ansprüche, **dadurch gekennzeichnet, dass** die Steuerungsvorrichtung (22) dazu eingerichtet ist, während des definierten Zeitraums das Auftreten von Schlupf als Betriebszustand fortlaufend zu bestimmen.

8. Selbstfahrender Feldhäcksler (1) nach Anspruch 7, **dadurch gekennzeichnet, dass** die Steuerungsvorrichtung (22) dazu eingerichtet ist, bei fortwährender Detektion des Auftretens von Schlupf als Betriebszustand den definierten Zeitraum iterativ, insbesondere um den definierten Zeitraum, zu verlängern.

9. Selbstfahrender Feldhäcksler (1) nach einem der vorangehenden Ansprüche, **dadurch gekennzeichnet, dass** der zumindest eine Betriebszustand ein Betriebszustand ist, in welchem eine Schubumkehr im Riemenantrieb auftritt.

10. Selbstfahrender Feldhäcksler (1) nach Anspruch 9, **dadurch gekennzeichnet, dass** die Steuerungsvorrichtung (22) dazu eingerichtet ist, den Betriebszustand der Schubumkehr in Abhängigkeit vom Entkoppeln der Messertrommel (6a) und der Nachbeschleunigungsvorrichtung (8) vom Antriebsmotor (9) zu bestimmen.

11. Selbstfahrender Feldhäcksler (1) nach Anspruch 9 oder 10, **dadurch gekennzeichnet, dass** die Steuerungsvorrichtung (22) dazu eingerichtet ist, zumindest eine am Verteilergetriebe (11) angeordnete Hydraulikpumpe (13) anzusteuern, um im Betriebszustand der Schubumkehr das Fördervolumen zu erhöhen.

12. Verfahren zum Betreiben eines selbstfahrenden Feldhäckslers (1), mit einem Antriebsmotor (9), durch den mittels eines Verteilergetriebes (11) eine Messertrommel (6a) und eine Nachbeschleunigungsvorrichtung (8) durch einen gemeinsamen Riemenantrieb angetrieben wird, wobei der Riemenantrieb einen Antriebsriemen (14) aufweist, durch den über eine auf einer Antriebswelle (11a) des Verteilergetriebes (11) angeordnete Abtriebsriemenscheibe (12) eine der Messertrommel (6a) zugeordnete Antriebsriemenscheibe (15) und eine der Nachbeschleunigungsvorrichtung (8) zugeordnete Antriebsriemenscheibe (16) angetrieben werden, wobei der Antriebsriemen (14) durch eine hydraulisch betätigbare Riemenspannvorrichtung (17) mit einer ersten Vorspannkraft (VK1) beaufschlagt wird, wobei die erste Vorspannkraft (VK1) durch eine Steuerungsvorrichtung (22) des Feldhäckslers (1) eingestellt wird, **dadurch gekennzeichnet, dass** zumindest ein Betriebszustand des Riemenantriebs im Häckselbetrieb durch zumindest eine Sensoreinheit detektiert wird, wobei durch die Steuerungsvorrichtung (22) in Abhängigkeit vom zumindest einen detektierten Betriebszustand die erste Vorspannkraft (VK1) durch Ansteuerung einer Ventilanordnung (23) automatisch für einen einstellbaren definierten Zeitraum auf eine zweite Vorspannkraft (VK2) erhöht wird.

13. Verfahren nach Anspruch 12, **dadurch gekennzeichnet, dass** als der zumindest eine Betriebszustand ein Betriebszustand bestimmt wird, in welchem an der Antriebsriemenscheibe (15) der Messertrommel (6a) das Auftreten von Schlupf detektiert wird, wobei der zumindest eine Betriebszustand bestimmt wird, indem ein durch die Steuerungsvorrichtung (22) gebildeter Quotient aus der Antriebsdrehzahl des Antriebsmotors (9) und der Drehzahl der Messertrommel (6a) mit einem Grenzwert verglichen wird, wobei der Grenzwert durch den Quotienten überschritten wird.

14. Verfahren nach Anspruch 12 oder 13, **dadurch gekennzeichnet, dass** als der zumindest eine Betriebszustand ein Betriebszustand bestimmt wird, in welchem eine Schubumkehr im Riemenantrieb detektiert wird.

15. Verfahren nach Anspruch einem der Ansprüche 12 bis 14, **dadurch gekennzeichnet, dass** bei fortwährender Detektion des Auftretens von Schlupf als Betriebszustand der definierte Zeitraum durch die Steuerungsvorrichtung (22) iterativ um den definierten Zeitraum verlängert wird.
